(19) **Europäisches Patentamt**

**European Patent Office**

**Office européen des brevets**

(11) Veröffentlichungsnummer : **0 154 875**
**B1**

(12) **EUROPÄISCHE PATENTSCHRIFT**

(45) Veröffentlichungstag der Patentschrift :
04.05.88

(51) Int. Cl.⁴ : **G 01 N 21/47**

(21) Anmeldenummer : **85102028.9**

(22) Anmeldetag : **23.02.85**

(54) **Gerät zur Bestimmung des diffusen Reflexionsvermögens einer Probenfläche kleiner Abmessungen.**

(30) Priorität : **02.03.84 DE 3407754**

(43) Veröffentlichungstag der Anmeldung :
**18.09.85 Patentblatt 85/38**

(45) Bekanntmachung des Hinweises auf die Patenterteilung : **04.05.88 Patentblatt 88/18**

(84) Benannte Vertragsstaaten :
**AT BE CH DE FR GB IT LI LU NL SE**

(56) Entgegenhaltungen :
**EP-A- 0 075 766**
**EP-A- 0 081 947**
**US-A- 3 645 634**
**PATENT ABSTRACTS OF JAPAN, Band 1, Nr. 76 Seite 1160 E 77, 21. Juli 1977; & JP - A - 52 13378 (HITACHI SEISAKUSHO K.K.) 02.01.1977**

(73) Patentinhaber : **Boehringer Mannheim GmbH**
**Sandhofer Strasse 116**
**D-6800 Mannheim 31 (DE)**

(72) Erfinder : **Händler, Erich, Dr.rer.nat.**
**Waldstrasse 38**
**D-6840 Lampertheim (DE)**
Erfinder : **Knoll, Dieter, Dr.rer.nat.**
**Wendelinsweg 4**
**D-6242 Kronberg (DE)**
Erfinder : **Strohmeier, Werner, Dr.rer.nat.**
**Pöltnerstrasse 23**
**D-8120 Weilheim (DE)**

EP 0 154 875 B1

## Beschreibung

Die vorliegende Erfindung betrifft ein Gerät zur Bestimmung des diffusen Reflexionsvermögens einer Probenfläche kleiner Abmessungen, insbesondere des Testfeldes eines Teststreifens zur Bestimmung von Inhaltsstoffen einer Körperflüssigkeit mit einem Halbleiter-Lichtsender, insbesondere einer Leuchtdiode, zum Aussenden von sichtbarem oder infrarotem Licht auf die Probenfläche, einem Meßempfänger zum Empfangen des von der Probenfläche diffus reflektierten Lichts und Erzeugung eines diesem entsprechenden elektrischen Signals, einer eine elektronische Schaltung einschließenden Auswertevorrichtung zur Umwandlung des Empfängersignals in einen dem diffusen Relexionsvermögen entsprechenden Meßwert und einem das Licht des gleichen Senders benutzenden Referenzkanal zur Kalibration des Gerätes und zur Elimation von Meßfehlern, die durch Veränderungen des Senders oder anderer elektronischer Bauteile verursacht werden.

Geräte zur Bestimmung des diffusen Reflexionsvermögens einer Fläche sind in vielerlei Ausführungsformen bekannt. Ganz besondere Anforderungen werden jedoch an solche Geräte gestellt, die dazu dienen sollen, das Reflexionsvermögen des Testfeldes eines Teststreifens zu bestimmen. Gerade für derartige Geräte besteht jedoch ein zunehmender Bedarf, weil Teststreifen seit einigen Jahren mit einer so guten Genauigkeit gefertigt werden können, daß der auf ihnen stattfindende Farbumschlag bei entsprechend exakter apparativer Auswertung zur quantitativen Bestimmung von Inhaltsstoffen von Körperflüssigkeiten, insbesondere Blut verwendet werden kann. Von besonderer Bedeutung ist in diesem Zusammenhang die Bestimmung des Blutzuckers mit Hilfe von Teststreifen und zugehörigen Auswertegeräten, durch die es möglich wurde, daß Diabetiker ihre Blutzuckerwerte selbst in verhältnismäßig dichten Abständen genau bestimmen können. Dadurch ist es gelungen, Medikamente, insbesondere Insulin, präziser als zuvor möglich zu dosieren und infolgedessen das Auftreten der gefürchteten Spätschäden der Diabetes erheblich zu reduzieren.

Für diesen Zweck geeignete Geräte müssen sehr hohe Genauigkeitsanforderungen erfüllen. Andererseits müssen sie dies unter Randbedingungen erreichen, die bei den bisherigen Geräten zur Bestimmung des Reflexionsvermögens nicht üblich waren. Insbesondere steht zum Vermessen nur eine kleine Fläche zu Verfügung. Zum Beispiel hat ein mit dem Gerät gemäß der vorliegenden Erfindung bevorzugt zu vermessender Teststreifen zwei unmittelbar benachbarte Testfelder mit einer Gesamtfläche von 6 x 6 mm, die in der Mitte geteilt sind. Von der daraus resultierenden Testfeldbreite von 3 mm steht nur eine Breite von etwa 1,2 mm zur reflexionsphotometrischen Auswertung zur Verfügung.

Um in großen Stückzahlen möglichst vielen Anwendern zur Verfügung gestellt zu werden, müssen die Geräte kostengünstig zu produzieren sein. Weitere wesentliche Anforderungen sind eine kleine Bauweise und Batteriebetrieb. Einen erheblichen Fortschritt in dieser Hinsicht hat ein Gerät erbracht, welches einen Halbleiter-Lichtsender, insbesondere eine Leuchtdiode verwendet, dessen Licht über eine Ulbrichtsche Kugel zur diffusen Beleuchtung der Probenfläche verwendet wird. Das von der Probenfläche diffus reflektierte Licht wird über eine spezielle Blendenkonstruktion von einem Lichtempfänger aufgenommen. Nähere Einzelheiten sind in der europäischen Patentanmeldung mit der Veröffentlichungsnr. 75 766 beschrieben. Mit diesem Gerät läßt sich überraschenderweise bei Verwendung einer Leuchtdiode als Lichtquelle eine Präzision erreichen, wie sie bisher nur bei Verwendung von Lichtquellen hoher Konstanz und Intensität erreicht werden konnte. Von besonderem Vorteil ist dabei, daß das Gerät als Zweikanalgerät mit einem Meßkanal und einem Referenzkanal ausgebildet ist. Der Begriff « Referenzkanal » bezeichnet im hier verwendeten Sinne einen optischen Strahlengang, der sich vom optischen Strahlengang des Meßkanals zumindest insoweit unterscheidet, als er nicht die Probenfläche einschließt. Referenzkanäle sind in verschiedener Ausbildung in der Photometrie bekannt. Der Referenzkanal des erwähnten Geräts ist so ausgestaltet, daß es möglich ist, mit einem einmaligen Kalibarationsvorgang bei der Herstellung des Gerätes ohne weitere Eichmessungen das diffuse Reflexionsvermögen der Testfelder von Teststreifen zu bestimmen.

Trotz dieser sehr guten Ergebnisse befriedigt das dort beschriebene Gerät nicht in jeder Hinsicht. Insbesondere erfordert die Ulbrichtsche Kugel einen nicht unerheblichen konstruktiven Aufwand. Auch der damit verbundene Platzbedarf ist nicht unter allen Umständen tolerierbar, insbesondere dann nicht, wenn bei einem sogenannten Mehrfelderteststreifen mehrere dicht beieinander liegende Testfelder ausgewertet werden sollen, ohne daß sie nacheinander in den Meßbereich einer einzigen Meßeinrichtung bewegt werden müssen. Dies erfordert mehrere dicht beieinander angeordnete Meßeinrichtungen, was bei Verwendung einer Beleuchtung über eine Ulbrichtsche Kugel allenfalls mit sehr großem Aufwand zu realisieren ist.

Aufgabe der vorliegenden Erfindung ist es daher, ein Gerät zur Bestimmung des diffusen Reflexionsvermögens einer Probenfläche zur Verfügung zu stellen, das bei Verwendung eines Halbleiter-Lichtsenders als Strahlungsquelle, kleiner Bauweise und geringen Herstellungskosten eine möglichst genaue Messung ermöglicht.

Diese Aufgabe wird bei einem Gerät der eingangs näher bezeichneten Art dadurch gelöst, daß der Referenzkanal derartig ausgestattet ist, daß der Zentralstrahl des zur Referenzmessung verwendeten Strahlenbündels mit dem des zur Probenbeleuchtung verwendeten Strahlenbündels beim Verlassen des Senders übereinstimmt, so daß die gleiche Raumrichtung des den Halbleiter-Lichtsenders verlassenden Lichts für die Probenmessung und die Referenzmessung verwendet wird.

Der Erfindung liegt die Erkenntnis zugrunde, daß Halbleiter-Lichtsender, insbesondere Leuchtdioden (im folgenden wird der Einfachheit halber, jedoch ohne Beschränkung der Allgemeinheit, nur noch von Leuchtdioden gesprochen) eine Lichtverteilungskurve haben, die sich mit wechselnder Stromstärke und Temperatur in komplizierter Weise und nicht etwa nur im Sinn einer affinen Abbildung ändert. Mit anderen Worten : Mit wechselnder Temperatur und Stromstärke ändert sich das Verhältnis der Lichtstärke zweier bestimmter Raumrichtungen. Soweit bisher Leuchtdioden im Zusammenhang mit der reflexionsphotometrischen Auswertung von Teststreifen verwendet wurden und dabei ein Referenzkanal vorgesehen war, wurden diese Unterschiede nicht beachtet, was zu einer entsprechend schlechten Genauigkeit der Geräte führte. Bei dem erwähnten Gerät mit einer Ulbrichtschen Kugel ergibt sich eine sehr hohe Genauigkeit trotz der beschriebenen Änderungen der Lichtverteilungskurve der Leuchtdioden deshalb, weil die Ulbrichtsche Kugel das von der Leuchtdiode ausgesandte Licht über alle Raumwinkel integriert und das so integrierte Licht nicht nur zur Beleuchtung der Probenfläche, sondern auch einer im Referenzkanal liegenden Referenzfläche verwendet wird.

Aus der erwähnten Erkenntnis leitet die Erfindung die Lehre ab, die gleiche Raumrichtung der Leuchtdiode, die man für die Probenmessung verwendet, auch für die Referenzmessung zu verwenden und dadurch zu erreichen, daß die erwähnten Änderungen der Lichtverteilungskurve mit Stromstärke und Temperatur den Meßkanal und den Referenzkanal in gleicher Weise betreffen. Durch Quotientenbildung können so auch über lange Zeiträume Fehler eliminiert werden, ohne daß komplizierte Bauteile, die einen erheblichen Raumbedarf haben, notwendig sind.

Der Referenzkanal erfüllt seine Aufgabe, sowohl langfristige als auch kurzfristige Schwankungen des für die Probenbeleuchtung verwendeten Strahlenbündels möglichst genau zu erfassen angesichts der besonderen Charakteristik der Leuchtdiode um so besser, je weitgehender das zur Referenzmessung verwendete Strahlenbündel (« Referenzstrahlenbündel ») mit dem zur Probenbeleuchtung verwendeten Strahlenbündel (« Probenstrahlenbündel ») übereinstimmt. Dies ist optimal der Fall, wenn nicht nur der Zentralstrahl beider Strahlenbündel übereinstimmt, sondern auch beide die gleiche Kontur haben. Experimentell hat sich jedoch gezeigt, daß eine ausreichende Genauigkeit erreicht werden kann, wenn das Gerät so konstruiert ist, daß eine Reihe geometrischer Bedingungen erfüllt sind, die Gegenstand bevorzugter Ausführungsformen der vorliegenden Erfindung sind. Eine Rolle spielt hier insbesondere die Größe des Raumwinkels, der von den beiden Strahlenbündeln jeweils erfaßt wird. Dieser sollte einerseits absolut verhältnismäßig klein sein, um einen kleinen Winkel zwischen der Detektionsachse und der Beleuchtungsachse zu ermöglichen, ohne daß Probleme mit der Spiegelreflexion der Probenfläche (« Glanzprobleme ») auftreten. Zugleich wird dadurch der eng benachbarte Aufbau mehrerer Meßkanäle für mehrere dicht beieinander liegende Testfelder eines Mehrfelder-Teststreifens erleichtert. Andererseits sollten die Raumwinkel bei beiden Strahlenbündeln möglichst weitgehend übereinstimmen, um die Schwankungen des für die Probenbeleuchtung verwendeten Lichtstrahls möglichst genau zu erfassen. Hierzu sollte der Raumwinkel des von der Leuchtdiode ausgehenden Lichts, der sowohl für die Probenbeleuchtung als auch für den Referenzkanal benutzt wird, kleiner sein als 0,1 Steradiant, bevorzugt kleiner als 0,01 Steradiant. Beide Raumwinkel sollten sich nicht um mehr als einen Faktor 10, bevorzugt nicht um mehr als einen Faktor 2 unterscheiden, wobei wesentlich ist, daß der Raumwinkel des Strahlenbündels des Referenzstrahls vollständig in dem des Meßstrahls liegt, d. h. daß das Referenzstrahlenbündel ein Ausschnitt des Probenstrahlenbündels ist.

Wie erwähnt, ist die Erfindung insbesondere für Geräte geeignet, die kleine Probenflächen vermessen und selbst kleine Abmessungen haben. Bevorzugt soll deshalb der Abstand zwischen der Leuchtdiode und der Probenfläche maximal 200 mm, bevorzugt nicht mehr als 50 mm betragen. In diesem Zusammenhang ist zu betonen, daß sich ein optisches System nicht einfach dadurch verkleinern läßt, daß man die Maße eines vorbekannten größeren optischen Systems linear verkleinert. Vielmehr entstehen hier spezifische Probleme, die beispielsweise damit zusammenhängen, daß sich die Bauteile, wie insbesondere Beleuchtungsquellen und Empfänger nicht in beliebiger Weise maßstäblich verändern lassen. Die Erfindung trägt den besonderen Erfordernissen eines kleinen Systems unter Verwendung von Leuchtdioden als Lichtquelle Rechnung.

Bevorzugt beträgt der Abstand zwischen Halbleiter-Sender und Probenfläche mindestens 5, besonders bevorzugt mindestens 10 mm. Bei kürzeren Entfernungen wird es einerseits schwierig, durch entsprechend kleine Blenden die bevorzugten kleinen Raumwinkel zur realisieren. Außerdem wirken sich Fehler in der Positionierung der Probenfläche bezüglich ihres Abstands zur Leuchtdiode relativ um so stärker aus, je geringer dieser Abstand ist.

Die Erfindung läßt sich in verschiedenerlei Weise realisieren. So kann beispielsweise ein Referenzempfänger hinter der Probenfläche in Richtung des diese beleuchtenden Lichtstrahls angeordnet sein. Dieser erfaßt das von der Leuchtdiode ausgesandte Licht, solange keine Probenfläche im Strahlengang liegt. Danach wird diese eingelegt und das diffus reflektierte Licht über einen vom Referenzempfänger getrennten Meßempfänger gemessen. Nachteilig an dieser Lösung ist eine verhältnismäßig komplizierte Handhabung und die Tatsache, daß die Probenmessung und die Referenzmessung nicht gleichzeitig durchgeführt werden können, so daß eine derartigen Konstruktion nicht die Elimination kurzfristiger Veränderungen der Leuchtdiode erlaubt.

Diese Nachteile lassen sich vermeiden, wenn man im Strahlengang zwischen Leuchtdiode und

0 154 875

Probenfläche ein Bauelement zur Abzweigung des Referenzstrahls einfügt. Geeignet ist hier beispielsweise ein beweglicher Spiegel, der auch auf einem Chopper befestigt sein kann. Bei hinreichend hoher Bewegungsfrequenz werden hier auch recht kurzfristige Schwankungen der Beleuchtungsstärke erfaßt. Besonders bevorzugt ist jedoch die Verwendung eines Strahlteilers, der ständig einen gewissen Anteil des zur Probenbeleuchtung verwendeten Lichtstrahls abzweigt und dem Referenzkanal zuführt.

Die Verwendung eines Strahlteilers ist eine in der Optik gebräuchliche Maßnahme. In der europäischen Patentanmeldung mit der Publikationsnr. 81 947 wird ein Strahlteiler im Zusammenhang mit einem Tischgerät verwendet, das in erster Linie zur Bestimmung der phosphoreszierenden Lumineszenz einer Probenfläche bestimmt ist. Der Strahlteiler dient bei diesem Gerät dazu, den von einer 1 000 Volt, 7,5 Joule Xenonbogenlampe ausgehenden Lichtstrom aufzuteilen und einerseits auf die Probe, andererseits auf eine Vergleichsfläche zu richten. Über einen Chopper mit beweglichem Spiegel werden beide Strahlen abwechselnd einem gemeinsamen Meßempfänger zugeführt. Dies ist bei der vorbekannten Konstruktion hilfreich, um die erheblichen kurzfristigen Intensitätsschwankungen der Hochspannungs-Blitzlampe zu eliminieren. Die vorbekannte Konstruktion hat einen komplizierten Aufbau mit einer Vielzahl optischer Systeme, die beispielsweise notwendig sind, um den Lichtstrahl im Bereich des Choppers zu fokusieren und damit einen hinreichend steilen Flankenanstieg zu erreichen. Während somit in der Entgegenhaltung spezielle Probleme bei der Messung der phosphoreszierenden Lumineszens im Rahmen eines vergleichsweise komplizierten und teuren Tischgerätes gelöst werden, kann diese Publikation, abgesehen von der Vorbekanntheit eines Strahlteilers zur Abzweigung eines Vergleichsstrahls, keinen Hinweis geben, daß dieser vorteilhaft auch für den Referenzstrahl eines Handgerätes eingesetzt werden kann, das mit batteriebetriebenen Leuchtdioden arbeitet.

Um den baulichen Aufwand möglichst klein zu halten, wird bei dem erfindungsgemäßen Geräte bevorzugt ein getrennter Referenzempfänger für den Referenzkanal verwendet. Dadurch erübrigen sich Bauteile, die sonst notwendig wären, um beide Strahlen alternierend einem gemeinsamen Empfänger zuzuleiten. Beide Empfänger sind bevorzugt gleich ausgebildet und mit einer entsprechenden Auswerteelektronik verbunden, wie sie beispielsweise in der europäischen Patentanmeldung mit der Publikationsnummer 75 767 beschrieben ist.

Um den Referenzkanal möglichst vollständig dem Meßkanal anzugleichen, könnte es zweckmäßig erscheinen, auch im Referenzkanal, gegebenenfalls hinter dem Strahlteiler, eine das Licht diffus reflektierende Fläche anzuordnen. Gegebenenfalls könnte sich auch ein anderes Licht homogenisierendes Bauteil (Diffusor), beispielsweise eine Streuscheibe, eignen. Überraschenderweise hat sich jedoch gezeigt, daß auch ein Referenzstrahlengang, der vollständig auf solche Bauteile verzichtet, geeignet ist, nicht nur kurzfristige Schwankungen der Lichtstärke der Leuchtdiode zu erfassen, sondern auch nach nur einmaliger werksseitiger Kalibration als Standard für die Messung des diffusen Reflexionsvermögens verwendet zu werden. Der Verzicht auf dieses Bauteil verbessert die Langzeitstabilität des Gerätes und vermeidet den mit einem Diffusor notwendiger Weise verbundenen Intensitätsverlust.

Der Strahlteiler bestimmt durch sein Teilungsverhältnis wesentlich die bei dem Referenzempfänger ankommende Strahlungsintensität. Wenn man dieses Teilungsverhältnis nun gemäß einer bevorzugten Ausführungsform so bemißt, daß das vom Referenzempfänger erzeugte elektrische Signal etwa ebenso groß ist wie das vom Meßempfänger erzeugte, wenn eine Probenfläche mit einem sehr hohen diffusen Reflexionsvermögen von nahezu 100 % vermessen wird, läßt sich sicherstellen, daß das von dem Meßempfänger erzeugte Signal in der Praxis stets kleiner ist als das von dem Referenzempfänger erzeugte. Dadurch läßt sich die Auswertung in der elektronischen Auswertevorrichtung vereinfachen.

Die optimale Genauigkeit läßt sich dagegen mit Hilfe einer alternativen bevorzugten Ausführungsform erreichen, bei der das Teilungsverhältnis des Strahlteilers so bemessen ist, daß das Signal des Referenzempfängers mit dem des Meßempfängers etwa dann übereinstimmt, wenn eine Probe mit einem diffusen Reflexionsvermögen von etwa 10 % eingelegt ist. Da dieser Wert die logarithmische Mitte des gesamten Meßbereichs von 0 bis 100 % darstellt, ergibt sich mit dieser bevorzugten Ausführungsform im Durchschnitt der Fälle eine optimale Angleichung der vom Meßkanal und Referenzkanal zu verarbeitenden Signale und damit eine Erhöhung der Meßgenauigkeit.

Der Strahlteiler kann in vielerlei Weise gestaltet sein, beispielsweise als Strahlteilerwürfel oder Prisma. Besonders bevorzugt wird aber ein Plättchen aus durchsichtigem Material, insbesondere Glas oder Kunststoff verwendet, das zwei planparallele Flächen hat und zwischen Halbleiter-Sender und Probe dergestalt angeordnet ist, daß der das Plättchen durchdringende Strahl zur Probe und der von der senderseitigen Fläche des Plättchens reflektierte Strahl zum Empfänger des Referenzkanals geleitet wird. Eine derartige Konstruktion ist einfach und kostengünstig. Das dadurch erreichte Teilerverhältnis hat sich in der Praxis bewährt. Ein einfaches Mittel, das Teilerverhältnis zusätzlich zu beeinflussen, besteht darin, ein zweites entsprechendes Plättchen im Strahlengang des Referenzkanals einzusetzen, wobei in diesem Fall nur der reflektierte Strahl zum Referenzempfänger geleitet, der das Plättchen durchdringende Strahl dagegen weitgehend absorbiert wird.

Wie erwähnt richtet sich die Erfindung insbesondere auf ein Gerät, das mit einer einzigen werkseitigen Kalibration, d. h. ohne wiederholte Vermessung eines Reflexionsstandards während seiner gesamten Lebensdauer die Bestimmung des Reflexionsvermögens verschiedener Probenflächen erlaubt. Hierzu ist es besonders bevorzugt, daß die Geometrie der Strahlengänge des Meßkanals und des Referenzkanals über die Lebensdauer des Gerätes konstant gehalten wird. In der Praxis bedeutet dies insbesondere, daß die Probenfläche in der Richtung ihrer Flächennormalen so genau positioniert wird, daß die geforderte Meßgenauigkeit nicht durch Änderungen des Abstandes zum Lichtsender und Meßempfänger beeinträchtigt wird. Daneben müssen alle die Strahlengänge bestimmenden Bauteile fest montiert sein. Soweit Bauteile verwendet werden, die durch ihr Reflexionsoder Transmissionsverhalten die Intensität des bei dem Meßempfänger und Referenzempfänger ankommenden Lichts beeinflussen, muß dafür Sorge getragen werden, daß sich diese nicht in einem die Meßgenauigkeit beeinträchtigenden Maß verändern. Auch hier zeigt sich wiederum die Vorteilhaftigkeit eines einfachen Aufbaus unter Verwendung möglichst weniger Bauelemente.

Die erfindungsgemäße Konstruktion läßt sich besonders vorteilhaft zur Vermessung zweier sehr dicht beieinander liegender Probenflächen verwenden, insbesondere zur gleichzeitigen Bestimmung des Reflexionsvermögens beider Testfelder eines sogenannten Doppelfeld-Teststreifens. Hier werden besonders gute Ergebnisse erzielt, wenn zur Vermessung beider Testfelder völlig getrennt Meßkanäle verwendet werden, die auch jeweils ihre eigene Referenzkanäle haben. Dies gilt selbst dann, wenn das Licht zur Beleuchtung der Probenfläche von einer gemeinsamen Leuchdiode abgeleitet wird.

Die Erfindung wird im folgenden anhand eines in den Figuren dargestellten Ausführungsbeispiels näher erläutert. Es zeigen :

Fig. 1 die optische Einheit eines erfindungsgemäßen Geräts in perspektivischer schematischer Darstellung.

Fig. 2 einen Längsschnitt durch eine optische Einheit nach Fig. 1, wobei die Schnittebene in Fig. 1 mit II - II bezeichnet ist.

Fig. 3 einen Längsschnitt durch eine optische Einheit nach Fig. 1, wobei die Schnittebene in Fig. 1 mit III - III bezeichnet ist.

Fig. 4 eine Ansicht der optischen Einheit nach Fig. 1 aus der Richtung der Meßöffnung.

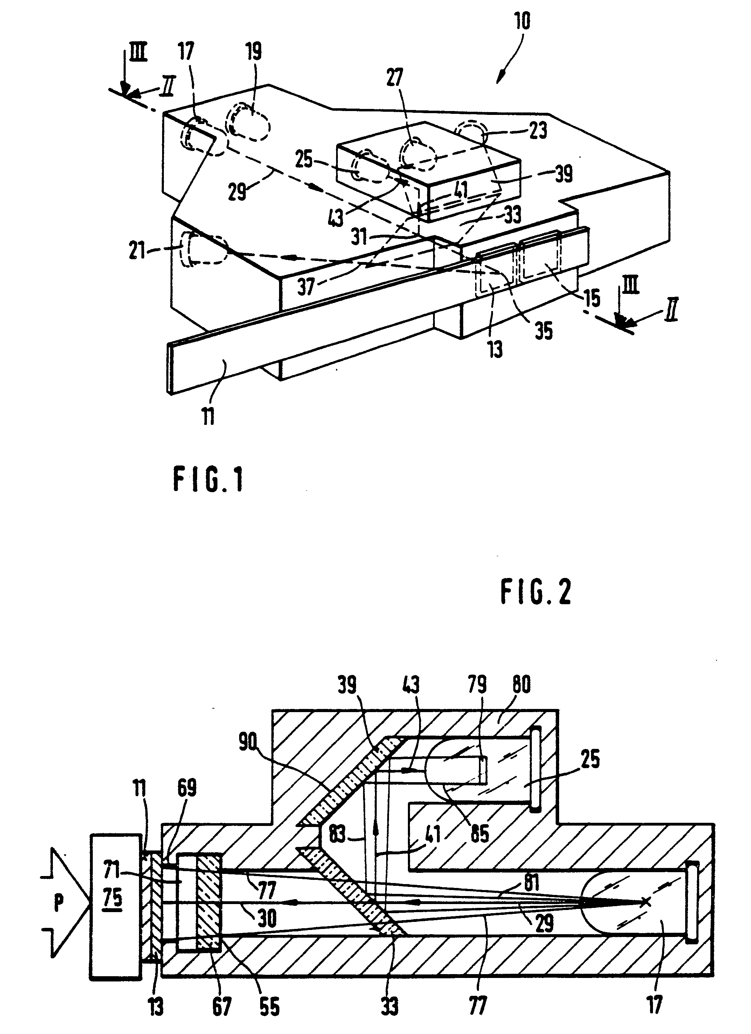

Fig. 1 zeigt in einer schematischen, stark vereinfachten perspektivischen Darstellung eine optische Einheit 10 einer bevorzugten Ausführungsform eines erfindungsgemäßen Gerätes. Man erkennt den Teststreifen 11, der ein Doppelfeld-Teststreifen ist, dessen Testfelder 13 und 15 ausgewertet werden sollen. Fig. 1 dient in erster Linie dazu, den Strahlengang in der optischen Einheit prinzipiell zu verdeutlichen. Einzelheiten sind den Figuren 2 bis 4 zu entnehmen.

Die dargestellt optische Einheit weist zwei vollständig getrennte Meßeinrichtungen für die beiden Testfelder 13 und 15 auf und hat deshalb zwei Leuchtdioden 17 und 19, zwei Meßempfänger 21 und 23 und zwei Referenzempfänger 25 und 27. Der Übersichtlichkeit halber ist nur eine der Strahlengänge als mit Pfeilen versehene gestrichelte Linien dargestellt.

Der Zentralstrahl des von der Leuchtdiode 17 ausgehenden Strahlenbündels ist, soweit er beim Verlassen der Leuchtdiode zugleich Zentralstrahl des Probenstrahls und des Referenzstrahls ist, mit 29 bezeichnet. Er tritt am Teilungspunkt 31 durch den Strahlteiler 33 hindurch und trifft etwa in der Mitte 35 des Testfeldes auf. Der zweite, nicht mehr mit dem Referenzstrahlenbündel gemeinsame Teil des Zentralstrahls des Probenstrahlenbündels ist mit 30 bezeichnet. Der von dem Testfeld 13 zu dem Meßempfänger 21 diffus reflektierte Lichtstrahl ist mit 37 bezeichnet. Der Lichtweg von der Leuchtdiode 17 zum Meßempfänger 21 bildet insgesamt den Meßkanal.

Beim Teilungspunkt 31 wird von dem Strahlteiler 33 ein Teil des zur Probenbeleuchtung verwendeten Strahlenbündels nach'oben gegen den zweiten Strahlteiler 39 reflektiert. Der Zentralstrahl dieses Teils des zur Referenzmessung verwendeten Strahlenbündels ist mit 41 bezeichnet. Das von dem Strahlteiler 39 erneut reflektierte Strahlenbündel, dessen Zentralstrahl mit 43 bezeichnet ist, fällt auf den Referenzempfänger 25.

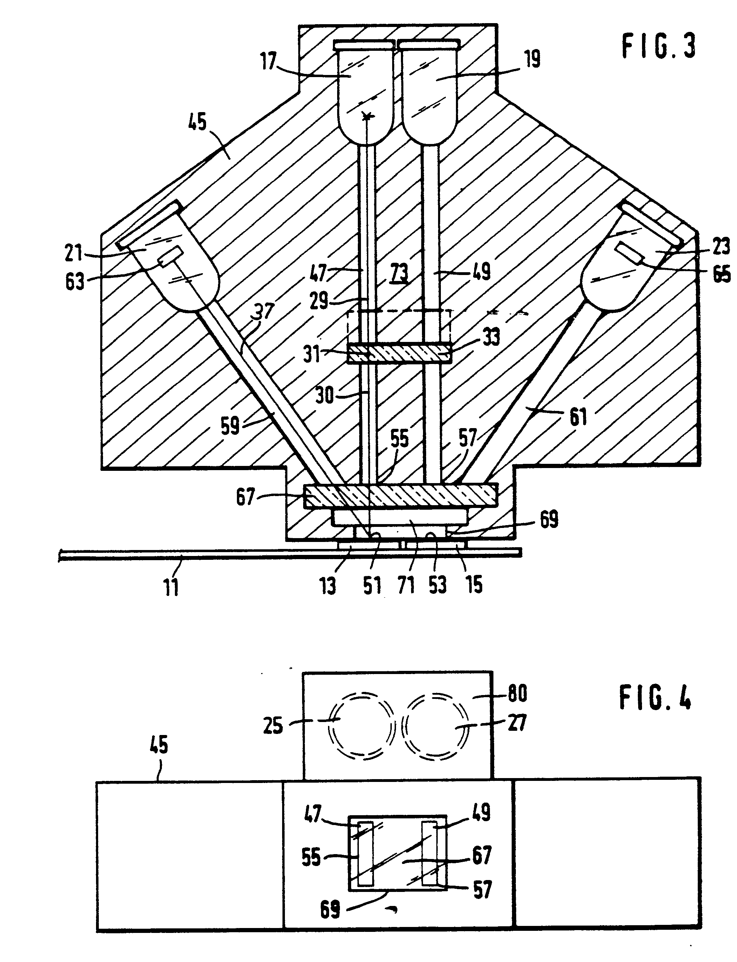

Die Figuren 2 bis 4 zeigen, ebenfalls schematisiert, nähere Einzelheiten der Konstruktion. Figur 2 ist ein Schnitt, in der durch den Zentralstrahl des zur Referenzmessung verwendeten Strahlenbündels 29, 41, 43 definierte Ebene. Diese Ebene verläuft senkrecht zu der Oberfläche des in Meßposition befindlichen Teststreifens 11, wobei sie diesen etwa in der Mitte des zu messenden Testfeldes (hier des Testfeldes 13) senkrecht zu seiner Längserstreckung schneidet. Figur 3 ist ein Schnitt durch die Ebene, in der der Zentralstrahl des zur Probenbeleuchtung verwendeten Strahlenbündels 30 und der Zentralstrahl (« Detektionsachse ») des von der Probenfläche zum Meßempfänger 21 diffus reflektierten Lichts 37 liegt. Diese Ebene verläuft ebenfalls etwa durch die Mitte des zu messenden Testfeldes und senkrecht auf die Oberfläche des in Meßposition befindlichen Teststreifens, jedoch erstreckt sie sich in dessen Längsrichtung und verläuft daher senkrecht auf die zuvor beschriebene Ebene.

In Fig. 3 erkennt man in einem Gehäuseblock 45 zwei Lichtschächte 47 und 49, durch die das von den Leuchtdioden 17 und 19 ausgehende Licht senkrecht auf die Probenflächen 51 und 53 fällt, die jeweils ein Teil der Oberflächen der Testfelder 13 und 15 des Teststreifens 11 sind. Die zur Probenbeleuchtung verwendeten Strahlenbündel beider Meßkanäle durchsetzen den in Fig. 3 lediglich im Querschnitt erkennbaren ersten Strahlteiler 33. Der Strahlteiler ist in der dargestellten Ausführungsform ein beiden Meßkanälen gemeinsames Glas- oder Kunststoffplättchen. Dies hat jedoch nur produktionstechnische Gründe. Optisch sind die beiden parallel verlaufenden Lichtschächte 47 und 49, wie aus der Fig. 3 zu entnehmen ist, durch den Steg 73 getrennt, so daß das Bauelement 33 optisch je einen getrennten Strahlteiler für die beiden dem Testfeld 13 und 15 zugeordneten Meßkanäle bildet. Bis zu dem Teilungspunkt 31 stimmt der Zentralstrahl des zur Probenbeleuchtung verwendeten Strahlenbündels 30 mit dem des zur Referenzmessung verwendeten Strahlenbündels überein. Beide sind in diesem Teil mit

## 0 154 875

dem Bezugzeichen 29 bezeichnet. Das zur Probenbeleuchtung verwendete Strahlenbündel wird am teststreifenseitigen Ende 55, 57 der Lichtschächte 47 und 49 durch deren Weite begrenzt. Diese bildet daher die Aperturblende des zur Probenbeleuchtung verwendeten Strahlenbündels. Man erkennt, daß nur ein schmaler Ausschnitt des die Leuchtdioden jeweils verlassenden Lichts zur Probenbeleuchtung verwendet wird.

Das von der Probenfläche 51 bzw. 53 diffus reflektierte Licht gelangt durch Lichtschächte 59 bzw. 61 zu den Meßempfängern 21 bzw. 23. Man erkennt, daß die Lichtschächte 59, 61 weiter sind als die Lichtschächte 47 und 49. Dadurch wird erreicht, daß das gesamte von dem beleuchteten Teil der Oberfläche der Testfelder 13 und 15, d. h. von den Probenflächen 51 und 53 in Richtung auf die lichtempfindlichen Flächen 63 und 65 der Meßempfänger 21 und 23 diffus reflektierte Licht erfaßt wird. Wären die Lichtschächte 59 und 61 zu eng ausgebildet, so bestünde die Gefahr, daß sie einen Teil des von den Meßempfängern 21 und 23 zu erfassenden Lichtes ausblenden. Dies könnte zur Folge haben, daß bei einer geringfügigen Änderung der Positionierung des Teststreifens in Richtung auf die Leuchtdioden 17 und 19 eine Veränderung des Signals stattfinden könnte.

Am teststreifenseitigen Ende der Lichtschächte 47, 49, 59 und 61 befindet sich ein Optikfenster 67. Man erkennt, daß das Optikfenster 67 gegenüber der Meßöffnung 69 zurückversetzt ist und eine Ausnehmung 71 freiläßt. Dadurch wird erreicht, daß das Optikfenster 67, welches zur Vermeidung von Verschmutzungen der Bauteile der optischen Einheit 10 vorgesehen ist, nicht seinerseits durch die Meßfelder 13 und 15, die ja mit einer Probenflüssigkeit, insbesondere Blut benetzt sind, verschmutzt werden kann.

Die Anordnung des Optikfensters 67 unmittelbar an den Enden 55 und 57 der Lichtschächte 47 und 49 stellt sicher, daß kein am Optikfenster 67 reflektiertes Licht zu den Meßempfängern 21 und 23 gelangen kann.

Der die beiden Lichtschächte 47 und 49 trennende Steg 73 endet am Optikfenster 67. In der Ausnehmung 71 zwischen Optikfenster 67 und Meßöffnung 69 ist keine Trennung zwischen den beiden Meßkanälen der Testfelder 13 und 15 vorgesehen. Um trotzdem eine gegeseitige Beeinflussung zuverlässig zu vermeiden, werden von der Meßelektronik nacheinander jeweils nur die Leuchtdioden und Meßempfänger eines Meßkanals angesteuert. Obwohl diese elektronische Trennung der beiden Meßkanäle bevorzugt ist, ist dem Fachmann ohne weiteres auch eine Lösung zugängig, bei der auch in der Ausnehmung 71 durch eine geeignete Blende eine optische Trennung beider Meßkanäle erreicht wird.

Sämtliche Bauteile, insbesondere die Leuchtdioden, die Photoempfänger und der bzw. die Strahlteiler sind in dem Gehäuseblock 45 in entsprechende Ausnehmungen genau eingepaßt, so daß sich ihre Position bei der Benutzung des Gerätes auch über lange Zeiten nicht verändert und somit die Geometrie der Strahlengänge langfristig erhalten bleibt.

Dadurch ist es möglich, das diffuse Reflexionsvermögen der Probenflächen mit nur einer einmaligen Kalibration bei der Herstellung des Gerätes über lange Zeiten zuverlässig zu bestimmen, wenn zugleich gewährleistet ist, daß sich die Probenfläche stets mit einer auf die gewünschte Meßgenauigkeit abgestimmten Präzision in der gleichen Entfernung zu der Leuchtdiode 17 bzw. 19 befindet. Aus diesem Grunde werden die Testfelder 13 und 15 von einer in Fig. 2 schematisch dargestellen Andruckvorrichtung 75 gegen die Meßöffnung 69 gedrückt, die sicherstellt, daß der Anpressdruck, der in Fig. 2 durch den Pfeil P symbolisiert ist, mit hinreichender Genauigkeit unter allen Meßbedingungen konstant bleibt. Eine entsprechende Vorrichtung ist in der europäischen Patentanmeldung mit der Publikationsnummer 37 484 beschrieben.

Das zur Probenbeleuchtung verwendete Strahlenbündel des einen Meßkanals, welches von der Leuchtdiode 17 ausgeht, den ersten Strahlteiler 33 und das Optikfenster durchdringt und bei der Meßöffnung 69 auf die Probenfläche 51 fällt, ist in seiner Erstreckung quer zur Längsrichtung des Teststreifens 11 in Fig. 2 zu erkennen. Die Randstrahlen sind mit 77 bezeichnet. Man erkennt, daß das zur Probenbeleuchtung verwendete Strahlenbündel in der Zeichenebene der Fig. 2 wesentlich breiter ist als in der Zeichenebene der Fig. 3. Die rechteckige Form läßt sich aus Fig. 4 besonders gut erkennen, in der die teststreifenseitige Enden 55 und 57 der Lichtschächte 47 und 49, die das zur Probenbeleuchtung verwendete Strahlenbündel begrenzen, dargestellt sind.

Der diesem Strahlenbündel entsprechende Raumwinkel läßt sich in bekannter Weise aus der Fläche des das Testfeld 13 beleuchtenden Rechtecks und dem Abstand des Testfeldes von der Lichtquelle berechnen. Die rechteckige Form des Lichtschachts wurde gewählt, um das zur Probenbeleuchtung verwendete Strahlenbündel der Form der nutzbaren Fläche der Testfelder 13 und 15 anzupassen. Man erkennt aus den Figuren auch, daß die von der Leuchtdiode 17 bzw. 19 beleuchteten Probenflächen 51 und 53 nur einen verhältnismäßig kleinen Teil der Oberflächen der Testfelder 13 und 15 ausmacht. Dies ist notwendig, weil die Randbereiche der Testfelder weniger homogen sein können und sich deshalb weniger gut zur Auswertung eignen. Es hat aber auch zur Folge, daß von der gesamten Testfeldfläche von beispielsweise 3 × 6 mm nur ein Teil von etwa 1,5 × 4 mm für die Auswertung zur Verfügung steht.

Wie aus Fig. 2 weiter zu ersehen ist, befindet sich der Referenzempfänger 25 in einem Aufsatz 80 des Gehäuseblocks 45. Zu ihm gelangt das zur Referenzmessung verwendete Strahlenbündel, dessen Randstrahlen mit den Bezugszeichen 81, 83 und 85 bezeichnet sind, über die zwei Strahlteilerplättchen 33 und 39 zu dem Referenzempfänger 25.

Der von dem Referenzstrahl benutzte Raumwinkel des von der Leuchtdiode 17 ausgehenden Lichts wird von der Größe der lichtempfindlichen Fläche 79 des Referenzempfängers 25 bestimmt. Diese ist in der Figur der Deutlichkeit halber vergrößert dargestellt. Bei einer bevorzugt als Referenzempfänger zur Anwendung kommenden Photodiode ist die lichtempfindliche Fläche nur etwa 1 mm × 1 mm groß. Man erkennt aus Fig. 2 deutlich, daß der Raumwinkel des Referenzstrahls voll in dem Raumwinkel des Probenstrahls liegt. Dies gilt nicht nur in der Ebene der Fig. 2, sondern auch in der Ebene der Fig. 3, in der der Deutlichkeit halber die entsprechenden Randstrahlen jedoch nicht dargestellt wurden.

Als Strahlteiler werden bevorzugt, wie in Fig. 2 dargestellt, planparallele Platten aus einem durchsichtigen Material wie Glas oder Kunststoff verwendet. Am ersten Strahlteiler 33 wird bei Verwendung von Glas ein Anteil von etwa 4 bis 5 % des einfallenden Lichtes von dem unter einen Winkel von 45 % angeordneten Strahlteiler vertikal nach oben reflektiert. Der zweite Strahlteiler wird in der dargestellten Ausführungsform praktisch als ein zur zusätzlichen Strahlabschwächung dienender Spiegel verwendet. Praktische Versuche haben nämlich ergeben, daß das oben erwähnte bevorzugte Teilungsverhältnis sich bei Verwendung eines zweiten Strahlteilers leicht erreichen läßt, wobei die zweimalige Umlenkung des Strahls den zusätzlichen Vorteil hat, daß sie zu einer besonders kleinen Bauweise führt. Das den zweiten Strahlteiler 39 durchdringende Licht wird auf dessen Rückseite von der weitgehend absorbierenden angrenzenden Oberfläche 90 im wesentlichen absorbiert. Der Grad der durch den zweiten Strahlteiler erzielbaren Strahlabschwächung läßt sich vorteilhaft dadurch einstellen, daß man die Fläche 90 mehr oder weniger absorbierend gestaltet.

Um die Größenverhältnisse zu verdeutlichen, werden im folgenden einige Maßangaben einer bevorzugten Ausführungsform des erfindungsgemäßen Gerätes angegeben :

| | |
|---|---:|
| Lichtschacht 47, Länge : | 11 mm |
| Querschnitt : | 0,8 mm × 3,2 mm |
| Lichtschacht 59, Länge : | 10,5 mm |
| Querschnitt : | 1,0 mm × 3,2 mm |

Abstand des Teststreifens von den Leuchtdioden : 20,5 mm Meßwinkel = Winkel zwischen den Zentralstrahlen 30 und 37 : 35° Dicke des Strahlteilerplättchens : 0,8 mm.

## Patentansprüche

1. Gerät zur Bestimmung des diffusen Reflexionsvermögens einer Probenfläche (51) kleiner Abmessungen, insbesondere des Testfeldes (13) eines Teststreifens (11) zur Bestimmung von Inhaltsstoffen einer Körperflüssigkeit mit

einem Halbleiter-Lichtsender, insbesondere einer Leuchtdiode (17), zum Aussenden von sichtbarem oder infrarotem Licht auf die Probenfläche (51),

einem Meßempfänger (21) zum Empfangen des von der Probenfläche (51) diffus reflektierten Lichts und zum Erzeugen eines diesem entsprechenden elektrischen Signals,

einer eine elektronische Schaltung einschließenden Auswertevorrichtung zur Umwandlung des Empfängersignals in einen dem diffusen Reflexionsvermögen entsprechenden Meßwert und

einem das Licht des gleichen Senders benutzenden Referenzkanal zur Kalibration des Gerätes und zur Elimination von Meßfehlern, die durch Veränderungen des Senders oder anderer elektronischer Bauteile verursacht werden, dadurch gekennzeichnet, daß der Referenzkanal derartig ausgestaltet ist, daß der Zentralstrahl (29, 41, 43) des zur Referenzmessung verwendeten Strahlenbündels mit dem Zentralstrahl (29, 30) des zur Probenbeleuchtung verwendeten Strahlenbündels beim Verlassen des Senders im wesentlichen übereinstimmt, so daß die gleiche Raumrichtung des den Halbleiter-Lichtsender (17) verlassenden Lichts für die Probenmessung und die Referenzmessung verwendet wird.

2. Gerät nach Anspruch 1, dadurch gekennzeichnet, daß das zur Probenbeleuchtung verwendete Strahlenbündel und das für den Referenzkanal verwendete Strahlenbündel einen kleinen Raumwinkel des von dem Halbleiter-Lichtsender ausgehenden Lichtstrahls benutzen.

3. Gerät nach Anspruch 2, dadurch gekennzeichnet, daß die Raumwinkel für beide Strahlen kleiner sind als 0,1 Steradiant, bevorzugt kleiner als 0,01 Steradiant.

4. Gerät nach einem der Ansprüche 1 bis 3, dadurch gekennzeichnet, daß der von dem für den Referenzkanal verwendeten Strahlenbündel benutzte Raumwinkel vollständig in dem von dem für die Probenbeleuchtung verwendeten Strahlenbündel benutzten Raumwinkel liegt.

5. Gerät nach einem der Ansprüche 1 bis 4, dadurch gekennzeichnet, daß beide Raumwinkel sich nicht um mehr einen Faktor 10, bevorzugt nicht um mehr als einen Faktor 2 unterscheiden.

6. Gerät nach einem der Ansprüche 1 bis 5, dadurch gekennzeichnet, daß der Abstand zwischen dem Halbleiter-Lichtsender (17) und der Probenfläche (51) zwischen 5 und 200 mm, bevorzugt zwischen 10 und 50 mm beträgt.

7. Gerät nach einem der Ansprüche 1 bis 6, dadurch gekennzeichnet, daß der Referenzkanal einen Strahlteiler (33) einschließt, der in dem Lichtweg zwischen dem Halbleiter-Lichtsender (17) und der Probenfläche (51) angeordnet ist und einen Teil des auf die Probenfläche (51) gerichteten Lichtstrahls für den Referenzkanal abzweigt.

8. Gerät nach Anspruch 7, dadurch gekennzeichnet, daß der Referenzkanal einen von dem Meßempfänger (21) für das von der Probe reflektierte Licht getrennten Referenzempfänger (25) hat.

9. Gerät nach einem der Ansprüche 1 bis 8, dadurch gekennzeichnet, daß der Strahlengang zwischen dem Halbleiter-Lichtsender (21) und dem Referenzempfänger (25) kein lichthomogenisiertes Bauteil aufweist.

10. Gerät nach einem Ansprüche 8 oder 9, dadurch gekennzeichnet, daß der Strahlteiler (33) ein derartiges Teilungsverhältnis hat, daß das von dem Referenzempfänger (25) erzeugte elektrische Signal etwa ebenso groß wie das von dem Meßempfänger (21) erzeugte ist, wenn eine Probenfläche von einem hohen diffusen Reflexionsvermögen (nahezu 100 %) gemessen wird.

11. Gerät nach einem der Ansprüche 8 oder 9, dadurch gekennzeichnet, daß der Strahlteiler (33) ein derartiges Teilungsverhältnis hat, daß das von dem Referenzempfänger (25) erzeugte elektrische Signal etwa ebenso groß wie das von dem Meßempfänger (21) erzeugte ist, wenn eine Probenfläche von einem diffusen Reflexionsvermögen von etwa 10 % gemessen wird.

12. Gerät nach einem der Ansprüche 7 bis 11, dadurch gekennzeichnet, daß der Strahlteiler (33) ein Plättchen aus durchsichtigem Material mit planparallelen Flächen ist, das zwischen dem Halbleiter-Lichtsender (17) und der Probenfläche (51) angeordnet ist, wobei der das Plättchen durchdrigende Strahl zur Probenfläche (51), der von der senderseitigen Fläche des Plättchens reflektierte Strahl zum Referenzempfänger (25) geleitet wird.

13. Gerät nach einem der Ansprüche 1 bis 12, dadurch gekennzeichnet, daß die Geometrie der Strahlengänge des Meßkanals und des Referenzkanals über die Lebensdauer des Gerätes konstant gehalten wird.

14. Gerät nach Anspruch 13, dadurch gekennzeichnet, daß die Probenfläche (51) in der Richtung ihrer Flächennormalen so genau positioniert wird, daß die geforderte Meßgenauigkeit nicht durch Änderungen des Abstandes zwischen der Probenfläche (51) und dem Halbleiter-Lichtsender (17) bzw. dem Meßempfänger (21) beeinträchtigt wird.

15. Gerät nach einem der Ansprüche 1 bis 14, dadurch gekennzeichnet, daß zur Messung zweier dicht beieinander angeordneter Probenflächen (51, 53), insbesondere eines Doppeltestfeldes eines medizinischen Teststreifens, zwei von dem gleichen Halbleiter-Lichtsender oder verschiedenen Halbleiter-Lichtsendern (17, 19) abgeleitete Strahlenbündel zur getrennten Beleuchtung der Probenflächen (51, 53) und zwei getrennte diesen zugeordnete Referenzkanäle (17, 33, 39, 25 ; 19, 33, 39, 27) vorgesehen sind.

## Claims

1. Apparatus for the determination of the diffuse reflectability of a sample surface (51) of small dimensions, especially of the test field (13) of a test strip (11), for the determination of component materials of a body fluid with a semi-conductor light emitter, especially of a luminescent diode (17), for the emission of visible or infra-red light to the sample surface (51), a measurement receiver (21) for the reception of the light diffusely reflected from the sample surface (51) and for the production of an electric signal corresponding to this, an evaluation device, including an electronic circuit, for the conversion of the receiver signal into a measurement value corresponding to the diffuse reflectability and a reference canal using the light of the same emitter for the calibration of the apparatus and for the elimination of measurement errors which are caused by changes of the emitter or of other electronic constructional parts, characterised in that the reference canal is constructed in such a manner that the central ray (29, 41, 43) of the beam used for the reference measurement corresponds essentially with the central ray (29, 30) of the beam used for the sample illumination in the case of leaving the emitter so that the same spatial direction of the light leaving the semi-conductor light emitter (17) is used for the sample measurement and the reference measurement.

2. Apparatus according to claim 1, characterised in that the beam used for the sample illumination and the beam used for the reference canal use a small solid angle of the light beam emerging from the semi-conductor light emitter.

3. Apparatus according to claim 2, characterised in that the solid angles for both beams are smaller than 0.1 steradiant, preferably smaller than 0.01 steradiant.

4. Apparatus according to one of claims 1 to 3, characterised in that the solid angle used by the beam employed for the reference canal lies in the solid angle used by the beam employed for the sample illumination.

5. Apparatus according to one of claims 1 to 4, characterised in that both solid angles differ by not more than a factor 10, preferably not more than a factor 2.

6. Apparatus according to one of claims 1 to 5, characterised in that the distance between the semi-conductor light emitter (17) and the sample surface (51) amounts to between 5 and 200 mm, preferably between 10 and 50 mm.

7. Apparatus according to one of claims 1 to 6, characterised in that the reference canal includes a beam divider (33) which is arranged in the light path between the semi-conductor light emitter (17) and the sample surface (51) and deviates a part of the light beam directed on to the sample surface (51) for the reference canal.

8. Apparatus according to claim 7, characterised in that the reference canal has a reference receiver (25) separate from the measurement receiver (21) for the light reflected from the sample.

9. Apparatus according to one of claims 1 to 8, characterised in that the beam path between the semi-conductor light emitter (21) and the reference receiver (25) does not have à light-homogenising constructional part.

10. Apparatus according to one of claims 8 or 9, characterised in that the beam divider (33) has a dividing ratio such that the electric signal produced by the reference receiver (25) is about equally great as that produced by the measurement receiver (21) when a sample surface of a highly diffuse reflectability (almost 100 %) is measured.

11. Apparatus according to one of claims 8 or 9, characterised in that the beam divider (33) has a dividing ratio such that the electric signal produced by the reference receiver (25) is about equally as great as that produced by the measurement receiver (21) when a sample surface of a diffuse reflectability of about 10 % is measured.

12. Apparatus according to one of claims 7 to 11, characterised in that the beam divider (33) is a platelet of transparent material with plane-parallel surfaces which is arranged between the semi-conductor light emitter (17) and the sample surface (51), whereby the beam penetrating the platelet is directed to the sample surface (51), the beam reflected from the emitter side surface of the platelet to the reference receiver (25).

13. Apparatus according to one of claims 1 to 12, characterised in that the geometry of the beam paths of the measurement canal and of the reference canal is kept constant over the period of life of the apparatus.

14. Apparatus according to claim 13, characterised in that the sample surface (51), in the direction of its surface normals, is so precisely positioned that the required measurement exactitude is not impaired by changes of the distance between the sample surface (51) and the semi-conductor light emitter (17) or the measurement receiver (21).

15. Apparatus according to one of claims 1 to 14, characterised in that, for the measurement of two sample surfaces (51, 53) arranged close to one another, especially of a double test field of a medical test strip, two beams derived from the same semi-conductor light emitter or different semi-conductor light emitters (17, 19) are provided for the separate illumination of the sample surfaces (51, 53) and two reference canals (17, 33, 39, 25 ; 19, 33, 39, 27) arranged separate from these.

**Revendications**

1. Appareil pour la détermination de la réflectivité diffuse d'une surface échantillon (51) de petites dimensions, notamment du champ d'essais (13) d'une bande d'essais (11) pour la détermination des substances contenues dans un liquide organique qui comprend une source lumineuse semi-conductrice, notamment une diode lumineuse (17) qui envoie de la lumière visible ou infrarouge sur la surface (51) de l'échantillon, un récepteur de mesures (21) qui reçoit la lumière réfléchie diffusée par la surface (51) de l'échantillon et qui émet un signal électrique correspondant, un dispositif de traitement de données qui comprend un circuit électronique et qui convertit un signal du récepteur en une valeur de mesure correspondant à la réflectivité diffuse, un canal de référence qui utilise la lumière de la même source lumineuse pour le calibrage de l'appareil et l'élimination d'erreurs de mesure dues à des modifications de la source lumineuse ou d'autres composants électroniques, caractérisé en ce que le canal de référence est réalisé de telle manière que le rayon central (29, 41, 43) du faisceau de rayons utilisé pour la mesure de référence coïncide sensiblement à la sortie de la source lumineuse avec le rayon central (29, 30) du faisceau de rayons utilisé pour l'éclairage de l'échantillon, afin que la même direction dans l'espace de la lumière provenant de la source lumineuse semi-conductrice (17) soit utilisée pour la mesure de l'échantillon et la mesure de référence.

2. Appareil selon la revendication 1, caractérisé en ce que le faisceau de rayons utilisé pour l'éclairage de l'échantillon et le faisceau de rayons utilisé pour le canal de référence occupent un petit angle solide du rayon lumineux provenant de la source lumineuse semi-conductrice.

3. Appareil selon la revendication 2, caractérisé en ce que l'angle solide correspondant aux deux rayons est inférieur à 0,1 stéradiant, de préférence inférieur à 0,01 stéradiant.

4. Appareil selon l'une quelconque des revendications 1 à 3, caractérisé en ce que l'angle solide occupé par le faisceau de rayons utilisé pour le canal de référence, est entièrement contenu dans l'angle solide occupé par le faisceau de rayons utilisé pour l'éclairage de l'échantillon.

5. Appareil selon l'une des revendications 1 à 4, caractérisé en ce que les deux angles solides ne se distinguent pas de plus d'un facteur 10, de préférence pas de plus d'un facteur 2.

6. Appareil selon l'une des revendications 1 à 5, caractérisé en ce que la distance entre la source lumineuse semi-conductrice (17) et la surface (51) de l'échantillon est comprise entre 5 et 200 mm, de préférence entre 10 et 50 mm.

7. Appareil selon l'une des revendications 1 à 6, caractérisé en ce que le canal de référence comprend un diviseur de rayons (33) qui est situé sur le trajet de la lumière entre la source lumineuse semi-conductrice (17) et la surface (51) de l'échantillon et qui dévie dans le canal de référence une partie du rayon lumineux dirigé sur la surface (51) de l'échantillon.

8. Appareil selon la revendication 7, caractérisé en ce que le canal de référence comporte un récepteur de référence (25) distinct du récepteur de mesure (21) de la lumière réfléchie par l'échantillon.

9. Appareil selon l'une des revendications 1 à 8, caractérisé en ce que le trajet suivi par les rayons entre la source lumineuse semi-conductrice (21) et le récepteur de référence (25) ne comporte pas de composant homogénéisant la lumière.

10. Appareil selon l'une des revendications 8 ou 9, caractérisé en ce que le diviseur de rayons (33) présente un rapport de division tel que le signal électrique émis par le récepteur de référence (25) est à peu près égal à celui qui est émis par le récepteur de mesure (21) quand la surface d'échantillon mesurée présente une réflectivité diffuse élevée (très voisine de 100 %).

11. Appareil selon l'une des revendications 8 ou 9, caractérisé en ce que le diviseur de rayons (33) présente un rapport de division tel que le signal électrique émis par le récepteur de référence (25) est à peu près égal à celui qui est émis par le récepteur de mesure (21) quand la surface d'échantillon mesurée présente une réflectivité de 10 % environ.

12. Appareil selon l'une des revendications 7 à 11, caractérisé en ce que le diviseur de rayons (33) est une plaquette en matériau transparent à surfaces planes parallèles situé entre la source lumineuse semi-conductrice (17) et la surface (51) de l'échantillon, le rayon qui traverse la plaquette étant dirigé vers la surface (51) de l'échantillon et celui qui est réfléchi par la surface de la plaquette tournée vers la source lumineuse étant dirigée vers le récepteur de référence (25).

13. Appareil selon l'une des revendications 1 à 12, caractérisé en ce que la géométrie des trajets des rayons dans le canal de mesure et dans le canal de référence est maintenue constante pendant toute la durée du service de l'appareil. ·

14. Appareil selon la revendication 13, caractérisé en ce que la surface (51) de l'échantillon est positionnée dans la direction des normales à ses surfaces avec une précision telle que la précision des mesures nécessaires n'est pas altérée par des modifications de la distance comprise entre la surface (51) de l'échantillon et la source lumineuse semi-conductrice (17) ou le récepteur de mesure (21).

15. Appareil selon l'une des revendications 1 à 14, caractérisé en ce que la mesure de deux surfaces d'échantillon (51, 53) très voisines l'une de l'autre, notamment dans le cas d'un champ d'essais double d'une bande d'essais médicaux, s'effectue en utilisant deux faisceaux de rayons provenant de la même source lumineuse semi-conductrice ou de sources lumineuses semi-conductrices différentes (17, 19) pour l'éclairage distinct des surfaces d'échantillon (51, 53) et deux canaux de référence distincts (17, 33, 39, 25, 19, 33, 39, 27) correspondant à ces faisceaux.

FIG.1

FIG.2

FIG.3

FIG.4